# EUROPÄISCHE PATENTSCHRIFT

(11) **EP 3 108 477 B1**
(45) Veröffentlichungstag und Bekanntmachung des Hinweises auf die Patenterteilung: **17.04.2019**
(21) Anmeldenummer: 15705612.8
(22) Anmeldetag: 19.02.2015
(51) Int. Cl.: G10L 17/00, G06F 21/30

(54) **VERFAHREN UND VORRICHTUNG ZUR IDENTIFIKATION ODER AUTHENTIFIKATION EINER PERSON UND/ODER EINES GEGENSTANDES DURCH DYNAMISCHE AKUSTISCHE SICHERHEITSINFORMATIONEN**
METHOD AND DEVICE FOR IDENTIFYING OR AUTHENTICATING A PERSON AND/OR AN OBJECT USING DYNAMIC ACOUSTIC SECURITY INFORMATION
PROCÉDÉ ET DISPOSITIF D'IDENTIFICATION OU D'AUTHENTIFICATION D'UNE PERSONNE ET/OU D'UN OBJET PAR DES INFORMATIONS DE SÉCURITÉ ACOUSTIQUES DYNAMIQUES

(30) Priorität: 20.02.2014 DE 102014002207
(43) Veröffentlichungstag der Anmeldung: 28.12.2016
(73) Patentinhaber: Kisters, Friedrich, 8280 Kreuzlingen (CH)
(72) Erfinder: Kisters, Friedrich, 8280 Kreuzlingen (CH)
(74) Vertreter: Patentanwälte Dr. Keller, Schwertfeger Partnerschaft mbB
(86) Internationale Anmeldenummer: PCT/EP2015/053543
(87) Internationale Veröffentlichungsnummer: WO 2015/124696

(56) Entgegenhaltungen:
- WO-A1-2010/066269
- WO-A2-97/17791
- WO-A2-2004/079498
- GB-A- 2 387 999

## Beschreibung

### Technisches Gebiet:

Die vorliegende Erfindung betrifft ein Verfahren zur Identifikation oder Authentifikation einer Person und/oder eines Gegenstandes unter Inanspruchnahme individueller, vorzugsweise akustischer Mittel oder damit verbundener digitaler Zeichenfolgen, die dynamische Sicherheitsinformationen umfassen. Ferner betrifft die Erfindung eine Authentifikationseinrichtung zur Durchführung des erfindungsgemäßen Verfahrens.

### Stand der Technik:

Für eine gültige Identifikation oder Authentifikation einer Person und/oder eines Gegenstandes sind unterschiedliche Verfahren bekannt, bei denen eine Sicherheitsabfrage anhand zuvor festgelegter Parameter erfolgt. Beispielsweise kann die Authentifikation durch Eingabe eines Codes, eines Kennwortes, über einen Schlüssel oder mittels biometrischer Merkmale erfolgen. Daneben gibt es Verfahren, bei denen eine Benutzer-Authentifikation mit Hilfe akustischer Signale, beispielsweise in Verbindung mit einem mobilen Endgerät erfolgt. Eine solche Vorrichtung ist beispielsweise in der WO 97/17791 beschrieben, bei der zunächst ein Verbindungsaufbau mit einem Authentifikations-Server erfolgt und anschließend dieser per DTMF (Dual Tone Multi Frequency; Doppelton-Mehrfrequenz) eine Zufallsnummer versendet. Hierbei wird ein akustisches Signal berechnet, verschlüsselt und anschließend an den Authentifikations-Server zurückgesendet. Nur wenn die übersendete akustische Sicherheitsinformation korrekt ist, wird der anrufende Teilnehmer für die zugeordneten Leistungsmerkmale zugelassen.

Neben akustischen Signalen wie Tönen oder Melodien kann auch die menschliche Stimme im Rahmen einer Spracherkennung für eine Authentifikation oder Identifikation eines Benutzers oder einer Telekommunikationseinrichtung verwendet werden. So wird beispielsweise in der EP 0 896 711 B1 eine Zugangskontrolle durch die Überprüfung einer oder mehrerer Sprechäußerungen eines Sprechers durchgeführt. Das Verfahren umfasst eine Spracherkennung eines Sprechers, bei dem ein prädiktives Model eingesetzt wird, mit dem die Identität einer Person in Abhängigkeit eines Sprachmusters ihrer Stimme überprüft wird. Dabei werden unter anderem die physiologischen Eigenschaften der menschlichen Stimme berücksichtigt. Ein Nachteil bei solchen Verfahren ist, dass die menschliche Stimme oder auch andere an sich starre akustische Sicherheitsinformationen, die auf einem definierten, hinterlegten Muster beruhen, relativ einfach kopiert werden können, wodurch ein nichtberechtigter Benutzer sich selbst authentifizieren oder identifizieren kann.

Einen anderen Ansatz verfolgt die DE 10 2007 012 953 A1, bei der eine Sprachkommunikation zwischen Telekommunikationsteilnehmern und der Verwendung eines biometrischen Schlüssels verschlüsselt erfolgt. Der biometrische Schlüssel wird aus einem biometrischen Merkmal eines der Teilnehmer gewonnen und dem jeweils anderen Teilnehmer als Sitzungsschlüssel mitgeteilt. Der Schlüssel kann beispielsweise durch Erfassung der biometrischen Daten über einen geeigneten Sensor des Telekommunikationsgerätes (z.B. einen Fingerabdrucksensor) jedes Mal neu generiert werden. Zur Übertragung über den Sprachkanal kann von der Programmkomponente ein moduliertes akustisches Signal generiert werden, welches sich zur Übertragung über den Sprachkanal eignet. Hierbei kann es sich zum Beispiel um eine Klangfolge oder eine Melodie handeln, in die durch entsprechende Modulation eine Zufallszahl eingebettet ist. Durch Demodulation des über den Sprachkanal empfangenen akustischen Signals kann die Zufallszahl zurückgewonnen werden. Die Zufallszahl wird dann über einen Kartenleser, beispielweise an eine Chipkarte, übergeben. Diese Zufallszahl wird mit Hilfe des geheimen Schlüssels des einen Teilnehmers signiert und die signierte Zufallszahl wird von dem Mobilgerät des Teilnehmers an das Mobilgerät des anderen Teilnehmers zurückübertragen. Dies erfolgt wiederum über den Sprachkanal durch Erzeugung eines entsprechend modulierten akustischen Signals. Bei der Übertragung der Zufallszahl bzw. der Rückübertragung der signierten Zufallszahl handelt es sich ebenfalls um ein starres Sicherheitsmerkmal, welches durch potentielle Hackerangriffe ohne Weiteres gehackt werden kann. Die Übertragung des Schlüssels mit Hilfe eines Sprachkanals stellt lediglich eine "Tarnung" der eigentlichen Sicherheitsinformation dar.

Daneben existieren noch kombinierte Verfahren, bei denen eine Authentifizierung anhand eines Stimmprofils in Kombination mit mindestens einer hinterlegten Telefonnummer erfolgt. Ein solches Verfahren ist beispielsweise in der DE 10 2006 047 793 A1 beschrieben. Auch solche kombinierte Verfahren bestehen aus einzelnen, starren Sicherheitsmerkmalen, die in der Kombination zwar die Sicherheit erhöhen, jedoch kopiert und damit umgangen werden können.

Die US 2013/0262873 A1 beschreibt ein Verfahren zur biometrischen Authentifizierung eines Benutzers einer mobilen Kommunikationseinrichtung, bei dem eine Benutzer-ID, ein Passwort und eine biometrische Nutzerinformation zur Authentifizierung herangezogen werden.

Die US 2007/0147669 A1 beschreibt ein Verfahren zur Authentifizierung eines Fingerabdruckes und anderer biometrischer Informationen, welches darauf basiert, sich verändernde Benutzerinformationen zu analysieren. Beispielsweise werden zu unterschiedlichen Aufnahmezeitpunkten sich überlappende Aufnahmen von Fingerabdrücken generiert und miteinander verglichen. Dabei werden bewusst Regionen analysiert, die exakt übereinstimmen, während andere Regionen zwischen den Aufnahmeintervallen einer Änderung unterliegen. Solche Veränderungen kommen beispielsweise dadurch zustande, dass ein Nutzer seine Finger unterschiedlich stark auf die Abtastvorrichtung auflegt, wodurch ein leicht verändertes Resultat entsteht.

In der WO 2010/066269 A1 wird ein Verfahren zur Verifizierung einer Person basierend auf einer Spracherkennung beschrieben. Hierzu wird beispielsweise ein Sprachmodell in einer Datenbank hinterlegt oder eine Sprachäußerung des Benutzers zur Authentifizierung herangezogen.

### Darstellung der Erfindung:

Vor diesem Hintergrund ist es Aufgabe der vorliegenden Erfindung, ein verbessertes Verfahren bereitzustellen, bei dem eine höhere Sicherheitsstufe zur Identifikation oder Authentifikation einer Person und/oder eines Gegenstandes ermöglicht wird.

Diese Aufgabe wird gelöst durch ein Verfahren mit den Merkmalen des Anspruchs 1 und eine entsprechende Vorrichtung zur Ausführung des Verfahrens.

Das erfindungsgemäße Verfahren verwendet eine Kombination aus starren und dynamischen Sicherheitsinformationen für die Identifikation oder Authentifikation einer Person und/oder eines Gegenstandes. Die dynamische Sicherheitsinformation ist für einen Angreifer (Hacker) oder eine nichtberechtige Person nicht oder kaum ermittelbar. Die dynamische Sicherheitsinformation besteht ihrerseits aus einer beliebigen Information, welche als Sicherheitselement herangezogen werden kann. Im Regelfall ist dies eine starre Sicherheitsinformation, die von einem dynamischen Faktor aktiviert und dabei zu einer dynamischen Sicherheitsinformation umgewandelt wird. In einer bevorzugten Variante ist die jeweilig zugrunde liegende Sicherheitsinformation ein Code, ein akustisches Sicherheitsmerkmal, oder ein biometrisches Merkmal. Dieses wird vor der eigentlichen Übertragung entweder durch eine dynamische Sicherheitsinformation ergänzt, oder durch eine dynamische Sicherheitsinformation umgewandelt, die bevorzugt lokal vorliegt. Im Gegensatz zu der bekannten Sicherheitsinformation kann die dynamische Sicherheitsinformation jeglicher Art sein, vorzugsweise werden jedoch die dynamische Sicherheitsinformation und die bekannte Sicherheitsinformation vom selben Typ sein, beispielsweise einem Code.

Auch dynamische Sicherheitselemente können mit weiteren dynamischen Sicherheitselementen kombiniert oder durch diese verändert werden. Dynamische Sicherheitselemente können zudem zu statischen Sicherheitselementen werden, insbesondere für nachfolgende Authentifizierungsvorgänge. Sie können dann durch neue dynamische Sicherheitselemente ergänzt werden.

Die bekannte Sicherheitsinformation wird einer konkreten Person oder einem konkreten Gegenstand zugeordnet. Vorzugsweise handelt es sich bei einem solchen Sicherheitsmerkmal um ein biometrisches Merkmal oder ein anderes individuelles oder individualisiertes Merkmal. Beispielsweise kann aus dem Profil der menschlichen Stimme ein Code generiert werden, der wiederum einer Person oder einem Gegenstand zugeordnet wird.

Bei dem Gegenstand im Sinne der Erfindung handelt es sich um eine stationäre, mobile oder portable Einrichtung, welche entweder durch sich selbst oder deren Nutzer zu authentifizieren ist. Beispielsweise kann es sich bei dem Gegenstand um ein mobiles Endgerät, vorzugsweise ein Telekommunikationsgerät, ein Mobiltelefon, ein Smartphone, einen PC, ein Tablet handeln. Die Authentifizierung der Person kann beispielsweise über eine Eingabevorrichtung einer stationären Anlage oder über den Gegenstand erfolgen.

Das erfindungsgemäße Verfahren basiert somit auf der Verwendung von statischen bzw. starren, vorzugsweise akustischen, Sicherheitsinformationen und dynamischen Sicherheitsinformationen. Eine starre Sicherheitsinformation ist eine Sicherheitsinformation, die der Authentifikationseinrichtung, beispielsweise einem mobilen oder stationären Datenbankserver bekannt ist. Bei einer akustischen Sicherheitsinformation kann es sich um eine oder mehrere Signalkurven, einen Ton oder ein Tongemisch, eine Melodie, ein Geräusch, eine Stimme oder eine sonstige in der Akustik verwendete Sicherheitsinformation handeln. Darunter kann beispielsweise auch ein Notenbild zu verstehen sein, bei dem die akustische Information in Notenschrift konvertiert ist. Die Decodierung dieser Notenschrift in Tonform ergibt eine akustische Sicherheitsinformation, welche im Sinne der vorliegenden Erfindung für Authentifizierungszwecke eingesetzt werden kann. Begleitend können weitere dynamische Sicherheitsmerkmale zusätzlich beigezogen werden.

Eine dynamische Sicherheitsinformation bezeichnet eine sich verändernde Sicherheitsinformation, die der Authentifikationseinrichtung nicht zwingend bekannt ist und sich zwischen zwei Abfragezeitpunkten verändert. Ein Abfragezeitpunkt muss hierbei nicht notwendigerweise ein Datenaustausch sein. Beispielsweise kann ein Abfragezeitpunkt als Beginn und als Ende einer Sitzung (z.B. Einloggen in ein System) definiert sein, während es innerhalb der Sitzung mehrere Abfragen gibt, bei denen die dynamischen Sicherheitsmerkmale unverändert bleiben. Ein Abfragezeitpunkt definiert somit den Zeitpunkt, bei dem die mit der Authentifizierungseinrichtung kommunizierende Datenbank mit der neuen Sicherheitsinformation aktualisiert wird. Während sich die bekannten Sicherheitsinformationen zwischen zwei Abfragezeitpunkten vorzugsweise nicht ändern und damit "starr" sind, verändern sich die dynamischen Sicherheitsinformationen in nicht vorhersehbare Weise zwischen den Abfragezeitpunkten. Diese Veränderung kann entweder lokal, d.h. auf dem Endgerät eines Nutzers oder zentral, beispielsweise in einer Server-Umgebung, oder auf beiden Seiten erfolgen. Die zentrale Datenbank muss nicht notwendigerweise stationär sein. Sie kann auch in einem mobilen Gerät integriert sein. Daneben sind auch mehrere Datenbanken möglich, bei denen die Daten über einen bestimmten Schlüssel aufgeteilt werden, und so für sich genommen keinen verwertbaren Inhalt darstellen.

Die Art und Weise sowie der Grad der Veränderung sind bei einer dynamischen Sicherheitsinformation nicht ohne Weiteres vorhersehbar. Eine gezielte Veränderung kann zufällig, regelbedingt oder durch interne oder externe Einflüsse bedingt sein. Im Gegensatz zu der bekannten Sicherheitsinformation verändert sich die dynamische Sicherheitsinformation während zwei festgelegten Abfragezeitpunkten. Eine Veränderung der Sicherheitsinformation findet vorzugsweise in dem Gerät statt, welches zur Authentifizierung oder Identifikation verwendet wird, beispielsweise einem mobilen Endgerät wie einem Mobiltelefon. Ein möglicher Angreifer weiß demnach nicht, wie sich die dynamische Sicherheitsinformation zwischen den Abfragezeitpunkten verändert oder verändert wird und auf welchen Regeln diese Veränderung beruht. Diese Veränderung kann ohne Regeln erfolgen, oder aufgrund lokaler Gegebenheiten, oder mit definierten Regeln. Diese "Regeln" sind dann lediglich lokal und/oder der Authentifizierungseinrichtung bekannt, so dass ein möglicher Angreifer sowohl die Authentifizierungseinrichtung als auch das mobile Endgerät in Besitz nehmen müsste, um einen etwaigen Angriff zu starten. Durch die für den nichtberechtigten Benutzer unvorhersehbare Veränderung der dynamischen Sicherheitsinformationen und Kombination mit bekannten starren akustischen Sicherheitsinformationen wird eine höhere Sicherheitsstufe erreicht, als es bei Verwendung von starren akustischen Sicherheitsinformationen (wie z.B. festgelegten Tönen oder der menschlichen Stimme) der Fall ist. Da sich die dynamischen Sicherheitsinformationen fortlaufend weiterentwickeln, weiß ein möglicher Angreifer nicht, wie sich diese Sicherheitsinformationen weiterentwickeln und nach welcher Regel eine jeweilige Änderung erfolgt.

Die einzelnen Sicherheitsinformationen sind vorzugsweise individuelle Sicherheitsinformationen, die beispielsweise auf biometrische Merkmale basieren. Bevorzugt sind akustische Sicherheitsinformationen, die akustische Signale, Hüllkurven, Geräusche, Melodien, Tonfolgen, Töne, Stimmen, Sprachen und Sprachteile, Betonungen und Ausdrucksweisen beim Sprechen, Sprachprofile, Rauschen, die mittels akustischer Mittel aufnehmbar und/oder darstellbar sind, umfassen. Ferner sind auch Kombinationen und Gemische solcher akustischer Sicherheitsinformationen von der Erfindung umfasst, beispielsweise mehrstimmige Melodien, Tonfolgen unterschiedlicher Frequenz und/oder Intensität, Signalgemische von akustischen Signalen, Tönen, Geräuschen, Melodien, etc. Akustische Signale können beispielsweise über ein Mikrofon oder einen sonstigen Sensor aufgezeichnet werden. Akustische Sicherheitsinformationen sind durch geeignete Verarbeitungseinrichtungen, beispielsweise durch Signal- und Tonkurven, Signalfolgen, aber auch durch Symbole wie Notenschrift oder sonstige Zeichen, audiovisuell darstellbar. Vorzugsweise sind die bekannten und/oder die dynamischen Sicherheitsinformationen durch Kurven, Signalfolgen, Symbole, Farben, Bilder, Buchstaben, Zahlen, Notenschrift oder sonstige Zeichen audiovisuell darstellbar.

Ein dynamisches Sicherheitsmerkmal, digital abgebildet, entspricht einer dynamischen, digitalen Sicherheitsinformation, die beispielsweise in Form eines Codes vorliegen kann. Diese digitale Sicherheitsinformation kann zur Authentifizierung einer Person herangezogen werden, indem sie dieser zugeordnet wird. Vorzugsweise würde ein solcher Code ähnlich einer Netzwerkadresse einer bestimmten Person oder einem Gegenstand zugeordnet werden und sich zumindest teilweise unvorhersehbar dynamisch verändern. In einer bevorzugten Ausführungsform würde die Stimme somit nicht unverändert (1:1) übermittelt und geprüft, sondern teilweise durch sich lokal ändernde Faktoren moduliert und erst danach übermittelt. In einer weiteren Variante würde diese Stimme durch einen Code begleitet, der teilweise statisch bleibt und teilweise ebenfalls moduliert wurde. Gleichfalls kann beispielsweise das Profil eines Fingerabdruckes in einen Code umgewandelt und als Sicherheitsinformation dienen. Daneben kann auch das Profil selbst, beispielsweise in Form eines digitalen Scans, als Sicherheitsinformation hinterlegt sein.

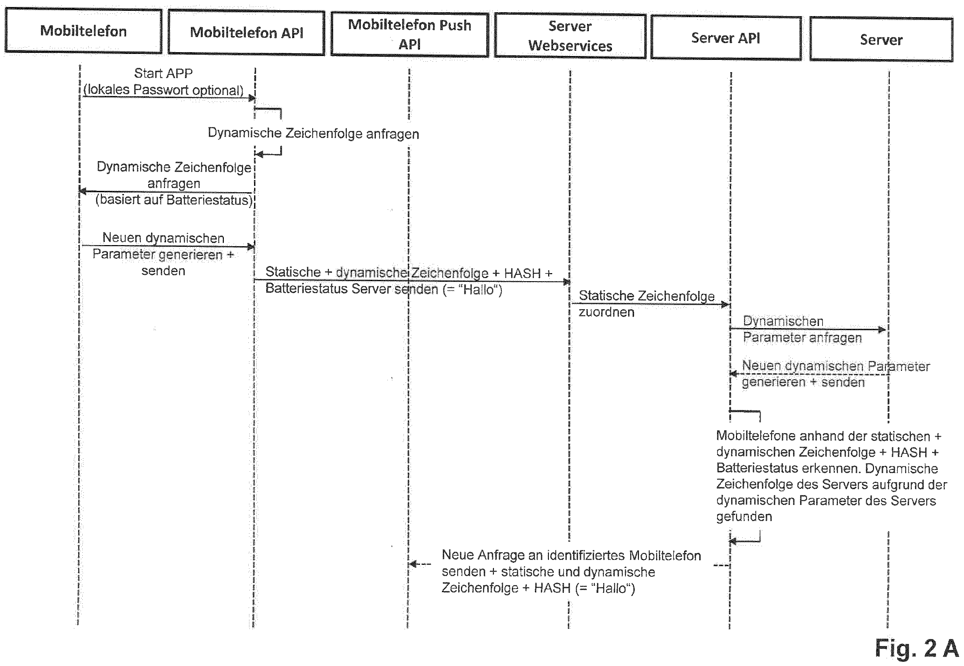

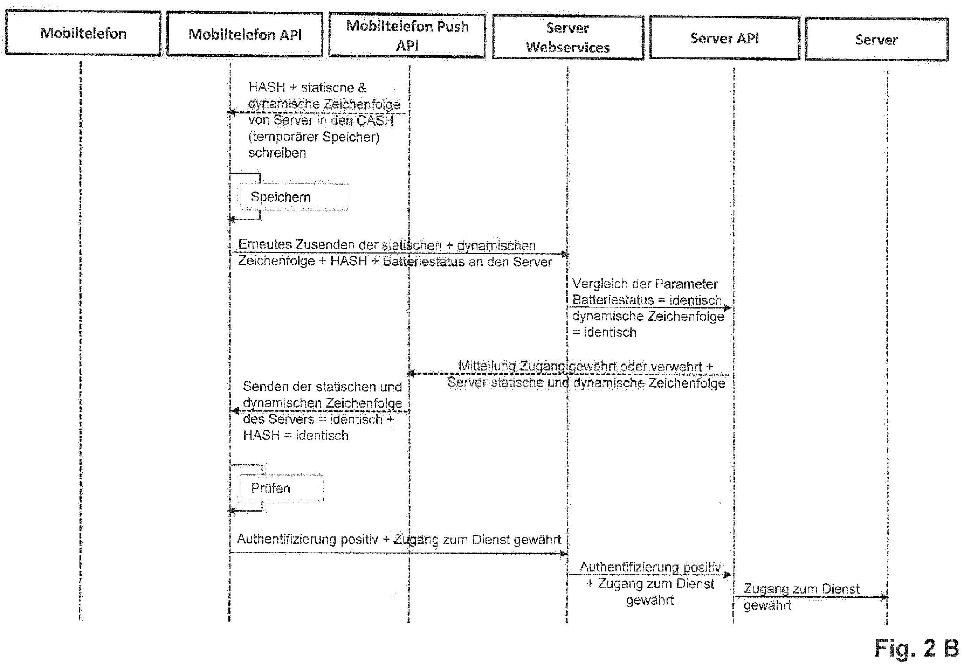

Erfindungsgemäß ist nun in einer bevorzugten Variante vorgesehen, dass die Authentifizierung über eine oder mehrere akustische Sicherheitsinformationen erfolgt, wobei die akustischen Sicherheitsinformationen aus bekannten akustischen Sicherheitsinformationen und sich veränderbaren dynamischen Sicherheitsinformationen bestehen, die jedoch nicht notwendigerweise akustisch sein müssen. Die bekannten Sicherheitsinformationen sind "starre" Sicherheitsinformationen, die vorzugsweise nur der Authentifizierungseinrichtung bekannt sind und einer bestimmten Person oder einem bestimmten Gegenstand zugeordnet werden. Auf diese Weise ist eine Vorauthentifizierung oder Identifikation der anzumeldenden Person oder des Gegenstandes möglich (siehe Figur 2). Es kann auch in unmittelbarer Folge der VorAuthentifizierung eine Dienstbereitstellungsanfrage erfolgen, bis zu welcher aufgrund der Vorauthentifizierung keine weitere Veränderung der dynamischen Sicherheitsinformation mehr erfolgt, dafür jedoch unter Umständen eine Umdrehung der Anfragerichtung. Durch diese Umdrehung der Anfragerichtung würde im Falle einer kopierten Identität statt des anfragenden Fälschers automatisch der korrekte Identitätsträger angefragt und dabei dessen dynamische Sicherheitsfaktoren aktualisiert und der zuvor anfragende Fälscher dadurch unmittelbar entlarvt.

Die bekannte Sicherheitsinformation kann auch ein Signalgemisch oder ein Signalprofil sein, wodurch ein "akustischer Fingerabdruck" entsteht. Als solches können die bekannten Sicherheitsinformationen "in sich" durchaus dynamisch sein (ein Stimmverlauf ist zum Beispiel auch dynamisch, wodurch ein Profil entsteht), wobei erfindungsgemäß die dynamische Sicherheitsinformation dadurch charakterisiert ist, dass diese sich fortlaufend verändert und zwar in einer Art und Weise, dass eine Zuordnung zu einer bestimmten Person oder einem bestimmten Gegenstand ohne Weiteres nicht mehr möglich ist. Die Veränderung betrifft hierbei vorzugsweise den Zustand der dynamischen Sicherheitsinformation zwischen zwei Abfragezeitpunkten, d.h. zwischen den Zeitpunkten, in denen die in der Datenbank vorhandene dynamische Sicherheitsinformation durch eine aktuelle dynamische Sicherheitsinformation erfolgreich ersetzt wird.

Erfindungsgemäß ist ferner vorgesehen, dass die bekannten Sicherheitsinformationen zumindest der lokalen Authentifizierungseinrichtung bekannt sind. Vorzugsweise sind die dynamischen Sicherheitsinformationen zum Zeitpunkt der letzten Abfrage oder Aktualisierung nur der zentralen Authentifizierungseinrichtung bekannt. Allerdings verändern sich die dynamischen Sicherheitsinformationen stetig, so dass bei einer nachfolgenden Authentifizierung die im System vorhandenen dynamischen Sicherheitsinformationen durch eine aktuelle dynamische Sicherheitsinformation ersetzt bzw. aktualisiert wird. Ein möglicher Angreifer oder Fälscher weiß demnach nicht, welche aktuelle dynamische Sicherheitsinformation aktuell im System hinterlegt ist. Er erhält allenfalls Rückschluss auf die bekannte, "starre" Sicherheitsinformation.

Erfindungsgemäß ist ferner vorgesehen, dass ein Speichermittel zur Hinterlegung der akustischen Sicherheitsinformationen bereitgestellt wird. Das Speichermittel kann beispielsweise ein Datenträger oder der Bestandteil eines Aufzeichnungsgeräts sein.

Vorzugsweise handelt es sich bei dem Speichermittel um ein Speichermedium wie z.B. eine Festplatte oder ein Magnetdatenträger. Das Speichermittel ist vorzugsweise Bestandteil einer zentralen, lokalen oder mobilen Datenbank.

Jede Person oder jeder Gegenstand, die dem System bekannt ist, ist in einer solchen Ausführungsform durch ein Profil, vorzugsweise ein akustisches Signalprofil charakterisiert, welches mehrere Sicherheitsinformationen umfasst. Jede Person oder jeder Gegenstand umfasst demnach akustische Sicherheitsinformationen, die spezifisch für die jeweilige Person oder den Gegenstand sind. In einem weiteren Verfahrensschritt erfolgt die Zuordnung dieser akustischen Sicherheitsinformationen oder Teilen davon zu einer bestimmten Person oder einem Gegenstand. Bei dem Gegenstand kann es sich um einen beliebigen Gegenstand handeln, der auf irgendeine Weise identifiziert oder authentifiziert werden muss. Zum Authentifizierungszeitpunkt (beispielsweise bei der Anmeldung einer Person in einem Dienstleistungssystem) erfolgt eine Übermittlung der von der zu identifizierenden oder authentifizierenden Person oder in dem Gegenstand gespeicherten oder generierten bekannten akustischen Sicherheitsinformation über eine Kommunikationseinrichtung. Die Übertragung der Sicherheitsinformationen kann akustisch, analog oder digital erfolgen und zuvor durch lokal veränderbare dynamische Faktoren verändert werden. In einer weiteren Variante kann die übertragende Sicherheitsinformation auch zwischen anderen dynamischen Sicherheitsinformationen untergemischt sein. Bei Bedarf kann die Sicherheitsinformation zusätzlich verschlüsselt oder in ein anderes Signal (z.B. analog-digital oder umgekehrt) umgewandelt werden. Die Kommunikation erfolgt beispielsweise über eine drahtlose oder drahtgebundene Verbindung zwischen einer Kommunikationseinrichtung und der Authentifizierungseinrichtung. Die Authentifizierungseinrichtung kann beispielsweise Bestandteil einer zentralen Datenbank sein. Die akustische Information kann dann durch ein geeignetes Endgerät auf andere Weise, zum Beispiel in Form eines Bildes oder eines Codes, visuell sichtbar gemacht werden.

Die bekannten Sicherheitsinformationen und die dynamischen Sicherheitsinformationen werden zum Zeitpunkt der Authentifizierung (oder einem anderen zufälligen oder festgelegten Zeitpunkt) an die zentrale, lokale oder mobile Datenbank über die Kommunikationseinrichtung übermittelt. Anschließend findet ein Vergleich der übermittelten bekannten Sicherheitsinformation und der dynamischen Sicherheitsinformation mit der in dem Speichermittel hinterlegten bekannten Sicherheitsinformation und der dynamischen Sicherheitsinformation statt. Grundsätzlich kann sich die bekannte Sicherheitsinformation zwar selbst dynamisch verändern (beispielsweise die Sprechweise einer Stimme), allerdings wird sich hierbei das Signalprofil nicht derart grundlegend verändern, dass eine Zuordnung der Sicherheitsinformation zu einer Person oder einem Gegenstand nicht mehr möglich ist. Die dynamische Sicherheitsinformation verändert sich in einer Ausführungsvariante dieser Erfindung jedoch in einer Weise, bei der es dem System ohne Weiteres nicht möglich ist, eine Person oder ein Gegenstand allein aufgrund dieser dynamischen Sicherheitsinformation zu identifizieren oder zu authentifizieren. Vorzugsweise wird das Signalprofil durch lokale dynamische Faktoren bereits vor dessen Übertragung verändert, um ein Kopieren und Wiederverwenden des ursprünglichen Signalprofils, beispielsweise der Stimme, durch unberechtigte Dritte zu verhindern.

Vorzugsweise handelt es sich bei der Sicherheitsinformation um eine Signalkomponente eines natürlich oder künstlich erzeugten Signals oder Signalgemisches. Das Hinzufügen einer nicht vorhersehbaren sich veränderbaren dynamischen Signalkomponente zu einer bekannten Signalkomponente führt zu einer maßgeblichen Erhöhung der Sicherheit bei der Authentifikation oder Identifikation. Findet die Veränderung der dynamischen Sicherheitsinformation in einem mobilen Endgerät (z.B. einem Mobiltelefon) statt, so können die Art und Weise und der Umfang der dynamischen Veränderung durch einen möglichen nichtberechtigten Benutzer oder Angreifer nicht vorhergesagt werden. Die Veränderung der dynamischen Sicherheitsinformationen erfolgt vorzugsweise aufgrund eines festgelegten physikalischen, mathematischen oder chemischen Parameters oder Einflusses. Beispielsweise kann die Veränderung der dynamischen Sicherheitsinformation über einen mathematischen Algorithmus erfolgen. Jedoch ist auch eine zeit- oder ortsabhängige Änderung der dynamischen Sicherheitsinformation denkbar. Beispielsweise kann vorgesehen sein, dass abhängig von der Tageszeit ein akustisches Signal als dynamische Sicherheitsinformation die menschliche Stimme als bekannte Sicherheitsinformation zum Zeitpunkt der Authentifizierung ändert und/oder überlagert. Es können auch Umgebungsgeräusche sowie Eigenschaften des Trägers der lokalen Datenbank mitberücksichtigt werden. Im Falle eines Mobiltelefons können dies der Ladezustand der Batterie, die genaue geografische Position, die zugeordnete Nummer der momentanen Funkzelle, die Außentemperatur, die Anzahl und Art der momentan genutzten oder installierten Apps (Software), die Geh- oder Fahrgeschwindigkeit, die Sprechgeschwindigkeit, die momentane Gegenstelle im Falle eines aktiven Anrufs, die Anzahl der in den letzten 60 Minuten versandten SMS und vieles mehr sein. Des Weiteren können sich verschiedene Merkmale unterschiedlich auf die Änderung, Kombination und Überlagerung verschiedener Ton- oder Klanggruppen auswirken. Überlagerungen können lokal je nach lokal vorkommenden unvorhersehbaren Parameteränderungen verschoben werden. Die Art und Weise und der Umfang der Überlagerung sind in einer Ausführungsvariante jedoch lediglich dem lokalen, in einer anderen lediglich dem zentralen System bekannt. In einer weiteren Variante sind gewisse Parameter auf beiden Seiten und in einer weiteren Variante alle Parameter auf beiden Seiten bekannt, im Regelfall nicht jedoch deren tatsächlich vorkommende Änderung. Je nach Betrachtungswinkel handelt es sich beim lokalen Datenbankträger um das mobile Endgerät oder aber um den zentralen Server. Außerdem können eine dritte und weitere Authentifikationsstellen zusätzlich zum zentralen Server hinzugezogen werden, um Risiken aufgrund des Einflusses der jeweiligen Administratoren zu reduzieren beziehungsweise zu eliminieren. Daneben kann in einer weiteren Ausführungsvariante vorgesehen sein, dass in der Authentifizierungseinrichtung eine Regel hinterlegt ist. Anhand dieser Regel wird die dynamische Sicherheitsinformation verändert. Die Regel kann beispielsweise eine Veränderung des Verlaufs von Signalkurven vorsehen. Die dynamische Sicherheitsinformation kann jedoch in Varianten auch durch ein Verhalten, die Sprechweise der zu identifizierenden Person oder eine andere bestimmte Eigenschaft der Person oder des Gegentandes verändert werden, so dass sie letztlich nicht vorhersehbar ist.

In einer Ausführungsform werden die bekannten und/oder die dynamischen Sicherheitsinformationen von einem zentralen Signalgenerator erzeugt und liegen beispielsweise in einem Signal- oder Tongemisch vor. Beispielsweise kann eine Melodie eine bekannte Sicherheitsinformation darstellen, welche statisch in dem Speichermittel hinterlegt und einer bestimmten Person und/oder einem bestimmten Gegenstand zugeordnet ist. Gleichzeitig kann eine dynamische Sicherheitsinformation diese Melodie als bekannte Sicherheitsinformation überlagern und sich entsprechend eines Algorithmus mit oder ohne Hinzunahme lokaler, sich unvorhersehbar ändernder Faktoren fortlaufend verändern. Zum Authentifizierungszeitpunkt werden die bekannten und/oder die dynamischen Sicherheitsinformationen, wenigstens jedoch die dynamischen Sicherheitsinformationen von der Kommunikationseinrichtung an die Authentifizierungseinrichtung übermittelt. Diese prüft, ob die übermittelten bekannten Sicherheitsinformationen mit den in dem Speichermittel hinterlegten bekannten Sicherheitsinformationen übereinstimmen und alle definierten Regeln eingehalten wurden. Gleichzeitig müssen sich die dynamischen Sicherheitsinformationen gegenüber den hinterlegten dynamischen Sicherheitsinformationen zum letzten Abfragezeitpunkt verändert haben. Ausnahme hierzu kann die unmittelbar nach dem "Handshake" (Vorauthentifizierung) erfolgende Zugangsabfrage zu Dienstleistungen darstellen, bis zu welcher, je nach Einstellung der Sicherheitsparameter, noch keine dynamische Änderung der Sicherheitsinformation erfolgt sein muss. Hierbei wird vor der eigentlichen erfindungsgemäßen Authentifizierung der Person oder des Gegenstandes eine Art Vorauthentifizierung zwischengeschaltet, bei der vor der eigentlichen Authentifizierung zunächst eine Übermittlung einer Sicherheitsinformation von einem Endgerät an die Authentifizierungseinrichtung und anschließend eine Rückanfrage von der Authentifizierungsantwort zu dem Endgerät an die in dem Speichermittel hinterlegte Person oder den Gegenstand erfolgt.

Direkt nach der Vorauthentifizierung und der Übermittlung der neuesten dynamischen Daten erfolgt in einer Variante die Aktivierungsanfrage, bei der die dynamischen Sicherheitsinformationen noch übereinstimmen können. Aufgrund der Richtungsänderung weg vom ursprünglich Anfragenden wird die Sicherheit dadurch erhöht, dass ein Hacker weder den "Handshake", noch die darauffolgende Zugangsanfrage oder Zugangsöffnung auslösen kann. Nur wenn sich die dynamische Sicherheitsinformation zumindest teilweise verändert hat und die bekannte Sicherheitsinformation übereinstimmt, ist die Person oder der Gegenstand positiv authentifiziert. Nach positiver Authentifizierung wird ein Zugang, beispielsweise zu einer Dienstleistung oder einem zu betretenden Raum, freigeschaltet.

Die dynamischen Sicherheitsinformationen können beispielsweise derart in einem Tongemisch vorliegen, dass sie für einen Menschen nicht erkennbar sind. Vorzugsweise sind die dynamischen Sicherheitsinformationen maschinenlesbar und für das menschliche Ohr nicht hörbar oder von den bekannten Sicherheitsinformationen ohne technische Hilfsmittel nicht unterscheidbar. Vorzugsweise liegen die akustischen Sicherheitsinformationen, bestehend aus bekannten und dynamischen Sicherheitsinformationen, in einem Gemisch vor, bei dem die einzelnen Sicherheitsinformationen mit Hilfe technischer Mittel darstellbar und unterscheidbar sind. Beispielsweise kann vorgesehen sein, dass zur Authentifikation eine Melodie verwendet wird, die mehrstimmig zusammengesetzt ist. So können beispielsweise die beiden ersten Stimmen der Melodie einer festgelegten, starren Tonfolge folgen und erfindungsgemäß eine bekannte Sicherheitsinformation definieren. Ferner könnte eine weitere Stimme vorgesehen sein, bei der sich einzelne Noten in Abhängigkeit einer zugrunde liegenden Regel in einer Weise verändern, so dass es dem Zuhörer nicht auffällt. So könnte sich beispielsweise die Melodie verlangsamen oder beschleunigen, oder zu jedem Authentifizierungszeitpunkt ein bestimmter Ton um ein Intervall nach oben oder nach unten verändern oder eine Pause eingefügt werden, ohne dadurch die Melodie merklich zu verändern. Außerdem können Töne in für das menschliche Gehör nicht wahrnehmbaren Frequenzen oder in Form von "Rauschen" dynamisch hinzugefügt werden. Die Authentifizierungseinrichtung kann vorzugsweise die einzelnen Tonfolgen der einzelnen Stimmen unterscheiden und feststellen, ob die dynamische Sicherheitsinformation (d.h. in diesem Beispiel die dritte Stimme) sich gegenüber der hinterlegten dynamischen Sicherheitsinformation des letzten Abfragezeitpunktes überhaupt verändert und/oder auf die vorgegebene Weise verändert hat. Sollte dies der Fall sein, ist eine Authentifizierung oder Identifikation positiv. Dieses Beispiel zeigt, dass die dynamische Sicherheitsinformation vorzugsweise von wenigstens einer bekannten Sicherheitsinformation zumindest teilweise überlagert ist.

Vorzugsweise ist das Speichermittel Bestandteil der Authentifizierungseinrichtung oder einer zentralen Datenbank, in der die Sicherheitsinformationen oder davon abgeleitete Daten hinterlegt sind. Bei der Aktualisierung der Datenbank wird die hinterlegte dynamische Sicherheitsinformation durch die übermittelte dynamische Sicherheitsinformation bzw. deren Daten ersetzt. Bedarfsweise kann auch ein Austausch oder eine Umwandlung der bekannten akustischen Sicherheitsinformation erfolgen, um die dynamische Sicherheit weiter zu erhöhen.

In einer Weiterentwicklung der Erfindung kann vorgesehen sein, dass vor, während oder nach der Authentifizierung die bekannte Sicherheitsinformation in eine dynamische Sicherheitsinformation oder die dynamische Sicherheitsinformation in eine bekannte Sicherheitsinformation umgewandelt wird. Dadurch wird eine höhere Sicherheitsstufe erreicht, da der Angreifer nicht weiß, wann und nach welcher Regel die Umwandlung der Sicherheitsinformationen erfolgt.

Die gewollte Veränderung der dynamischen Sicherheitsinformation kann beispielsweise über eine Verschiebung, Erhöhung oder Absenkung, Verstärkung, Abschwächung, Verkürzung, Verlängerung, einen Austausch oder eine sonstige Veränderung der Sicherheitsinformation erfolgen. Beispielsweise kann die Amplitude einer Signalkurve verkürzt, verlängert, verschoben, abgeschwächt oder verstärkt werden, oder die Klangfolge und das Tempo beschleunigt oder verlangsamt werden. In einem anderen Beispiel können einzelne Notenwerte einer Notenschrift verändert werden, beispielsweise durch die Änderung eines Noten- oder Pausenwertes, einen Wechsel der Tonart, die Änderung des Rhythmus oder die Hinzunahme eines Instrumentes beim Abspielen einer Melodie. Der dynamische Veränderungsprozess ermöglicht eine Veränderung der dynamischen Sicherheitsinformation auf eine Weise, die lediglich der Authentifizierungseinrichtung bekannt ist. Ein möglicher Angreifer müsste daher in Besitz des mobilen Endgerätes und der zentralen Datenbank bzw. der Authentifizierungseinrichtung gelangen, um eine Möglichkeit zu haben, die Sicherheitsabfrage zu überwinden. Mit einem fremden oder kopierten mobilen Endgerät wird es einem nichtberechtigten Benutzer nicht möglich sein, sich gegenüber dem System positiv zu authentifizieren bzw. zu identifizieren.

In einer bevorzugten Ausführungsform ist vorgesehen, dass die akustische Sicherheitsinformation einer dynamischen Sicherheitsinformation in Form eines individuellen Codes, einer Netzwerkadresse, einer Internetadresse oder eines sonstigen individuellen Merkmals zugeordnet wird, wobei die dynamische Sicherheitsinformation sowohl dynamische, sich verändernde Elemente als auch starre Elemente umfasst. Beispielsweise können sich bestimmte Stellen einer Netzwerkadresse zwischen zwei Abfragezeitpunkten fortlaufend in eine nicht vorhersehbare Weise ändern und somit den Zugriff für Dritte verunmöglichen.

Die Person und/oder der Gegenstand ist/sind dann positiv authentifiziert, wenn die übermittelte bekannte Sicherheitsinformation mit der in dem Speichermittel hinterlegten Sicherheitsinformation übereinstimmt und die übermittelte dynamische Sicherheitsinformation sich gegenüber der in dem Speichermittel hinterlegten Sicherheitsinformation im Vergleich zum letzten erfolgreichen Abfragezeitpunkt zumindest teilweise verändert hat.

Die Erfindung besteht ferner aus einer Authentifikationseinrichtung, die aus einer Ausleseeinrichtung für die Sicherheitsinformationen besteht. Bei einer akustischen Ausleseeinrichtung kann es sich beispielsweise um ein Mikrofon, eine optische Ausleseeinrichtung oder ein sonstiges Aufzeichnungsgerät für akustische Sicherheitsinformationen handeln. Ferner ist eine Kommunikationseinrichtung zum Austausch der akustischen Sicherheitsinformationen vorgesehen.

Mit der Kommunikationseinrichtung werden beispielsweise die bekannten oder dynamischen Sicherheitsinformationen an einen zentralen Datenbankserver von einem mobilen Endgerät übertragen. Ein Speichermittel ermöglicht die zentrale Hinterlegung und Speicherung der Sicherheitsinformationen, die zur Authentifizierung bzw. Identifizierung der Person oder des Gegenstandes erforderlich sind. Die Sicherheitsinformationen bestehen bei der Authentifikationseinrichtung aus bekannten und veränderbaren dynamischen Sicherheitsinformationen und die Authentifizierung erfolgt gemäß dem oben Beschriebenen.

### Wege zur Ausführung der Erfindung und gewerbliche Verwertbarkeit:

Die Erfindung wird in den nachfolgenden Beispielen erläutert:

### 1. Beispiel

Ein Mobiltelefon soll gegenüber einem zentralen Datenbankserver identifiziert werden. Hierzu wird ein Tongemisch unterschiedlicher Signale von dem mobilen Endgerät an den zentralen Datenbankserver übermittelt. In dem zentralen Datenbankserver befindet sich ein Speichermittel, in dem akustische Speicherinformationen hinterlegt sind, die der jeweiligen Person oder dem mobilen Endgerät zugeordnet sind. Ferner sind dynamische Sicherheitsinformationen hinterlegt, die den Sicherheitsinformationen des letzten Abfragezeitpunktes entsprechen.

Bei der Authentifizierung wird das Signalgemisch von einer Kommunikationseinrichtung zum zentralen Datenbankserver übertragen. Das übertragene Signalgemisch besteht aus bekannten Sicherheitsinformationen und dynamischen Sicherheitsinformationen. Die bekannten Sicherheitsinformationen können beispielsweise festgelegte Töne oder Signalfolgen sein, die in Datenform in dem Speichermittel des zentralen Datenbankservers hinterlegt sind. Ferner umfasst das Signalgemisch dynamische Signalkomponenten, die sich entsprechend einer zuvor festgelegten Regel verändern. Die Art der Veränderung ist lediglich der zentralen Authentifizierungseinrichtung bekannt. Beispielsweise kann vorgesehen sein, dass sich die Amplitude einer dynamischen Sicherheitsinformation nach jeder Authentifizierung um einen bestimmten Wert erhöht oder erniedrigt. Die Authentifizierung überprüft zum Authentifizierungszeitpunkt, ob diese Erhöhung mit der hinterlegten Regel übereinstimmt. Ist die Dynamik der Veränderung korrekt, ist die Person oder der Gegenstand positiv authentifiziert.

Die Veränderung der dynamischen Sicherheitsinformation ist beliebig. Statt der Erhöhung oder Absenkung einer Amplitude, eines Signals, kann beispielsweise auch eine Verschiebung des Signals entlang der Zeitachse erfolgen.

### 2. Beispiel

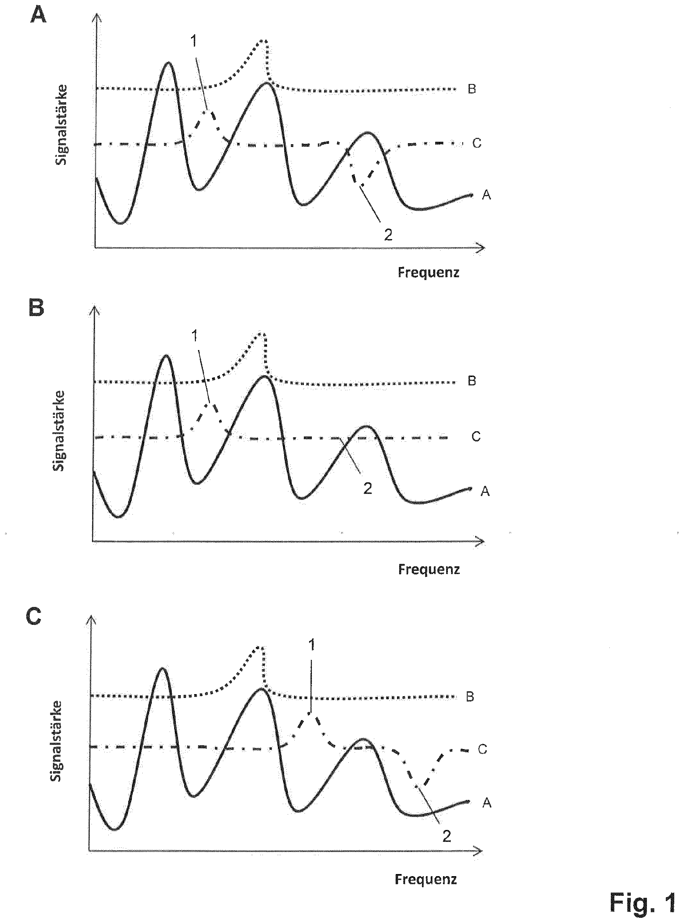

Ein weiteres Beispiel ist in Fig. 1 gezeigt. In Fig. 1 A sind unterschiedliche Sicherheitsinformationen A, B, C zu erkennen. Die Kurven A und B stellen die bekannten, statischen Sicherheitsinformationen dar. Die Kurve C stellt die dynamische Sicherheitsinformation dar, welche sich aufgrund einer zugrundeliegenden Regel zeit- oder ortsabhängig oder entsprechend einem chemischen oder physikalischen Parameter verändert. Der Auslöser der Veränderung ist nur der Authentifizierungseinrichtung bekannt. Mehrere dynamische Kurven können sich überlappen: solche, bei denen die Regeln auf beiden Seiten bekannt sind und solche, bei denen die dynamischen Veränderungen unvorhersehbar und lokal entstehen.

### 3. Beispiel

Ein mobiles Endgerät, beispielsweise ein Mobiltelefon, startet eine lokal abrufbare Software (App), wobei optional ein lokaler Code vorgesehen sein kann. Durch das Starten der Software wird eine dynamische Zeichenfolge erzeugt, die wiederum in dem mobilen Endgerät hinterlegt wird. Der dynamische Code ändert sich nach einer bestimmten Regel. Im Rahmen der Vorauthentifizierung ("Handshake") erfolgt eine Abfrage von der lokalen Datenbank zu der zentralen Datenbank, wobei die Abfrage einen statischen und dynamischen Code, einen HASH-Schlüssel sowie den Batteriestatus umfasst. Dadurch wird der Nutzer zunächst vorauthentifiziert. Ist das Mobiltelefon erkannt, werden der statische Teil des Codes und der HASH-Schlüssel sowie der Batteriestatus und der dynamische Code in einer zentralen Datenbank hinterlegt. Gleichzeitig wird ein dynamischer Servercode erzeugt, basierend auf einem dynamischen Parameter, der vom Server stammt. Vom Server erfolgt nun eine neue Abfrage zum mobilen Endgerät, indem die statische und dynamische Zeichenfolge sowie der HASH-Schlüssel des Servers zur lokalen Datenbank übermittelt werden. Der HASH-Schlüssel und die statischen sowie dynamischen Zeichen werden vom Server in den temporären Speicher geschrieben. Anschließend erfolgt ein erneutes Zusenden des statischen und dynamischen Codes, des HASH-Schlüssels sowie des Batteriestatus an den Server. Dabei wird der Parameter "Batteriestatus" mit dem hinterlegten Parameter auf Identität verglichen. Ferner muss auch die dynamische Zeichenfolge identisch sein. Ist beides positiv, so wird Zugang gewährt. Anhand des HASH-Schlüssels und des Batteriestatus ist somit eine Vorauthentifikation notwendig, bevor sich die eigentliche Authentifikation mittels statischer und dynamischer Zeichen anschließt.

Die dynamische Sicherheitsinformation C zeichnet sich durch einen Hochpunkt 1 und einen Tiefpunkt 2 aus. Zu einem ersten Abfragezeitpunkt wird dieses Profil bestehend aus den bekannten und dynamischen Sicherheitsinformationen auf einem zentralen Datenbankserver hinterlegt.

In Fig. 1 B ist zu erkennen, wie sich die dynamische Sicherheitsinformation C verändert, während die bekannten Sicherheitsinformationen A, B statisch bleiben. Die dynamische Sicherheitsinformation C hat sich dadurch verändert, dass zwar der Hochpunkt 1 verblieben ist, jedoch der Tiefpunkt C ausgelöscht wurde. Der Kurvenverlauf ist an dieser Stelle nunmehr glatt.

In Fig. 1 C ist ein weiteres Beispiel gezeigt. Hierbei ist die dynamische Sicherheitsinformation C gegenüber den Sicherheitsinformationen A, B nach rechts verschoben, d.h. der Hochpunkt A und der Tiefpunkt C haben sich in dem Profil verlagert. Bei einer erneuten Authentifizierung wird dieses Profil in dem Speichermittel des zentralen Datenbankservers hinterlegt. Anhand der bekannten Sicherheitsinformationen A, B ist eine Zuordnung zu einer bestimmten Person oder einem bestimmten Gegenstand möglich. Die Veränderung der dynamischen Sicherheitsinformation C ermöglicht eine rechtmäßige Authentifizierung oder Identifikation der Person oder des Gegenstandes. Voraussetzung ist, dass sich die dynamische Sicherheitsinformation C gegenüber dem letzten Abfragezeitpunkt dynamisch verändert hat und dass die Veränderung der erwarteten Veränderung entspricht. Sollte sich die Sicherheitsinformation C zwar verändert haben, nicht jedoch in der erwarteten Art und Weise oder im erwarteten Umfang, so würde eine Authentifizierung oder Identifikation fehlschlagen.

### 4. Beispiel

In diesem Beispiel umfasst das Verfahren zusätzlich eine Vorauthentifizierung nach dem Handshake-Prinzip.

## Patentansprüche

1. Verfahren zur Identifikation oder Authentifikation einer Person und/oder eines Gegenstandes über eine Authentifizierungseinrichtung, umfassend eine oder mehrere akustische Sicherheitsinformationen, die aus wenigstens einer der Authentifizierungseinrichtung bekannten Sicherheitsinformation und wenigstens einer sich veränderbaren dynamischen Sicherheitsinformation bestehen, umfassend die Schritte:
a) Bereitstellen eines Speichermittels zur Hinterlegung der akustischen Sicherheitsinformationen, wobei das Speichermittel eine Datenbank umfasst, in der die akustischen Sicherheitsinformationen oder davon abgeleitete Daten hinterlegt werden,
b) Zuordnen der akustischen Sicherheitsinformationen oder Teilen davon zu einer bestimmten Person oder einem Gegenstand,
c) Übermittlung der von der zu identifizierenden oder authentifizierenden Person oder in dem Gegenstand gespeicherten oder generierten bekannten akustischen Sicherheitsinformation und der dynamischen Sicherheitsinformation beim Authentifizierungszeitpunkt über eine Kommunikationseinrichtung,
d) Vergleich der übermittelten bekannten akustischen Sicherheitsinformation und der dynamischen Sicherheitsinformation mit den in dem Speichermittel hinterlegten bekannten und dynamischen Sicherheitsinformationen,
wobei die Person und/oder der Gegenstand dann positiv authentifiziert ist/sind, wenn die übermittelte bekannte akustische Sicherheitsinformation mit der in dem Speichermittel hinterlegten bekannten Sicherheitsinformation übereinstimmt und die übermittelte dynamische Sicherheitsinformation sich gegenüber der in dem Speichermittel hinterlegten dynamischen Sicherheitsinformation im Vergleich zum letzten Abfragezeitpunkt zumindest teilweise verändert hat, wobei bei der Aktualisierung des Speichermittels die hinterlegte Sicherheitsinformation durch die übermittelte Sicherheitsinformation ersetzt wird.

2. Verfahren nach Anspruch 1, **dadurch gekennzeichnet, dass** die dynamische Sicherheitsinformation sich aufgrund eines physikalischen, mathematischen oder chemischen Parameters oder Einflusses, eines Algorithmus, zeit- oder ortsabhängig, entsprechend einer in der Authentifizierungseinrichtung hinterlegten Regel oder durch das Verhalten, die Sprechweise der Person oder eine Eigenschaft der Person oder des Gegenstandes verändert.

3. Verfahren nach Anspruch 1 oder 2, **dadurch gekennzeichnet, dass** es sich bei der der Authentifizierungseinrichtung bekannten Signalinformation um eine akustische Signalinformation oder von einem akustischen Signal oder Signalgemisch abgeleitete Signalinformation handelt, die aus einer bekannten Sicherheitsinformation und einer dynamischen Sicherheitsinformation besteht.

4. Verfahren nach einem der vorhergehenden Ansprüche, **dadurch gekennzeichnet, dass** die bekannten und/oder dynamischen Sicherheitsinformationen von einem Signalgenerator erzeugt werden und als akustische Sicherheitsinformationen in einem Signal- oder Tongemisch vorliegen.

5. Verfahren nach einem der vorhergehenden Ansprüche, **dadurch gekennzeichnet, dass** die bekannten und/oder die dynamischen Sicherheitsinformationen durch Kurven, Signalfolgen, Symbole, Farben, Bilder, Buchstaben, Zahlen, Notenschrift oder sonstige Zeichen audiovisuell darstellbar sind.

6. Verfahren nach einem der vorhergehenden Ansprüche, **dadurch gekennzeichnet, dass** die bekannten und/oder die dynamischen Sicherheitsinformationen für das menschliche Ohr nicht hörbar sind.

7. Verfahren nach einem der vorhergehenden Ansprüche, **dadurch gekennzeichnet, dass** die bekannten und/oder die dynamischen Sicherheitsinformationen ausgewählt sind aus der Gruppe bestehend aus akustischen Signalen, Hüllkurven, Geräuschen, Melodien, Tonfolgen, Tönen, Stimmen, Sprachen und Sprachteilen, Betonungen und Ausdrucksweisen beim Sprechen, Sprachprofilen, Rauschen, die mittels technischer Mittel aufnehmbar und/oder darstellbar sind.

8. Verfahren nach einem der vorhergehenden Ansprüche, **dadurch gekennzeichnet, dass** die dynamische Sicherheitsinformation von wenigstens einer bekannten Sicherheitsinformation zumindest teilweise überlagert ist.

9. Verfahren nach einem der vorhergehenden Ansprüche, **dadurch gekennzeichnet, dass** vor, nach oder während der Authentifizierung die bekannte Sicherheitsinformation in eine dynamische Sicherheitsinformation oder die dynamische Sicherheitsinformation in eine bekannte Sicherheitsinformation umgewandelt wird.

10. Verfahren nach einem der vorhergehenden Ansprüche, **dadurch gekennzeichnet, dass** sich die akustischen Sicherheitsinformationen überlagern und sich einzelne Sicherheitsinformationen dynamisch verändern.

11. Verfahren nach einem der vorhergehenden Ansprüche, **dadurch gekennzeichnet, dass** die dynamische Veränderung der dynamischen Sicherheitsinformation über eine Verschiebung, Erhöhung oder Absenkung, Verstärkung, Abschwächung, Veränderung, Verkürzung, Verlängerung, Austausch der Sicherheitsinformation erfolgt.

12. Verfahren nach einem der vorhergehenden Ansprüche, **dadurch gekennzeichnet, dass** vor der eigentlichen Authentifizierung der Person oder des Gegenstandes eine Vorauthentifizierung zwischengeschaltet ist, bei der vor der eigentlichen Authentifizierung zunächst eine Übermittlung einer Sicherheitsinformation von einem Endgerät an die Authentifizierungseinrichtung und anschließend eine Rückanfrage von der Authentifizierungsantwort zu dem Endgerät an die in dem Speichermittel hinterlegte Person oder den Gegenstand erfolgt.

13. Verfahren nach einem der vorhergehenden Ansprüche, **dadurch gekennzeichnet, dass** die akustische Sicherheitsinformation einer dynamischen Sicherheitsinformation in Form eines individuellen Codes, einer Netzwerkadresse, einer Internetadresse oder eines sonstigen individuellen Merkmals zugeordnet wird, wobei die dynamische Sicherheitsinformation sowohl dynamische, sich verändernde Elemente als auch starre Elemente umfasst.

14. Authentifikationseinrichtung, bestehend aus
a) einer Ausleseeinrichtung für analoge und/oder digitale Sicherheitsinformationen,
b) einer Kommunikationseinrichtung zum Austausch der Sicherheitsinformationen,
c) einem Speichermittel zur zentralen Hinterlegung der Sicherheitsinformationen, **dadurch gekennzeichnet, dass** die Sicherheitsinformationen der Authentifikationseinrichtung aus bekannten Sicherheitsinformationen und sich veränderbaren dynamischen Sicherheitsinformationen bestehen und die Authentifizierung gemäß einem Verfahren nach einem der Ansprüche 1 bis 13 erfolgt.

## Claims

1. Method for identifying or authenticating a person and/or an object by means of an authentication device comprising one or more pieces of acoustic security information which consist of at least one piece of security information known to the authentication device and at least one piece of changing dynamic security information, the method comprising the steps of:
a) providing a storage means for storing the acoustic security information, wherein the storage means comprises a database in which the acoustic security information or data derived therefrom is stored,
b) assigning the acoustic security information or parts thereof to a particular person or an object,
c) transmitting the piece of known acoustic security information and the piece of dynamic security information stored or generated for the person to be identified or authenticated or in the object, at the time of authentication by means of a communication device,
d) comparing the transmitted piece of known acoustic security information and the piece of dynamic security information with the known and dynamic security information stored in the storage means,
wherein the person and/or the object is/are then positively authenticated if the transmitted piece of known acoustic security information matches the piece of known security information stored in the storage means and the transmitted piece of dynamic security information has at least partially changed with respect to the piece of dynamic security information stored in the storage means by comparison with the last request time, wherein the stored piece of security information is replaced with the transmitted piece of security information during updating of the storage means.

2. Method according to claim 1, **characterised in that** the piece of dynamic security information changes due to a physical, mathematical or chemical parameter or influence, an algorithm, depending on the time or location, in correspondence with a rule stored in the authentication device or by means of the behaviour, manner of speech or a characteristic of the person or of the object.

3. Method according to either claim 1 or claim 2, **characterised in that** the piece of signal information known to the authentication device is a piece of acoustic signal information or piece of signal information that is derived from an acoustic signal or composite signal and consists of a piece of known security information and a piece of dynamic security information.

4. Method according to any of the preceding claims, **characterised in that** the known and/or dynamic security information is generated by a signal generator and is present as acoustic security information in a composite signal or complex sound.

5. Method according to any of the preceding claims, **characterised in that** the known and/or the dynamic security information can be audio-visually represented by curves, signal sequences, symbols, colours, images, letters, numbers, notation or other signs.

6. Method according to any of the preceding claims, **characterised in that** the known and/or the dynamic security information is inaudible to the human ear.

7. Method according to any of the preceding claims, **characterised in that** the known and/or the dynamic security information is selected from the group consisting of acoustic signals, envelope curves, noises, melodies, sound sequences, sounds, voices, languages and parts of speech, intonations and enunciation while speaking, speech profiles and static noise, which can be received and/or represented by technical means.

8. Method according to any of the preceding claims, **characterised in that** the piece of dynamic security information is at least partially superimposed by at least one piece of known security information.

9. Method according to any of the preceding claims, **characterised in that** before, after or during authentication, the piece of known security information is converted into a piece of dynamic security information or the piece of dynamic security information is converted into a piece of known security information.

10. Method according to any of the preceding claims, **characterised in that** the acoustic security information is superimposed and individual security information dynamically changes.

11. Method according to any of the preceding claims, **characterised in that** the piece of dynamic security information is dynamically changed by shifting, increasing or reducing, amplifying, attenuating, changing, shortening, lengthening or exchanging the piece of security information.

12. Method according to any of the preceding claims, **characterised in that** a pre-authentication is placed before the actual authentication of the person or object, in which pre-authentication a piece of security information is first transmitted from a terminal to the authentication device and a return request for the person or object stored in the storage means is then made by the authentication response to the terminal before the actual authentication.

13. Method according to any of the preceding claims, **characterised in that** the piece of acoustic security information is assigned to a piece of dynamic security information in the form of an individual code, a network address, an Internet address or another individual feature, the piece of dynamic security information comprising both dynamic changing elements and rigid elements.

14. Authentication device, consisting of
a) a reading device for analogue and/or digital security information,
b) a communication device for exchanging security information,
c) a storage means for centrally storing the security information, **characterised in that** the security information of the authentication device consists of known security information and changing dynamic security information and the authentication is carried out in accordance with a method according to any of claims 1 to 13.

## Revendications

1. Procédé d'identification ou d'authentification d'une personne et/ou d'un objet par l'intermédiaire d'un dispositif d'authentification, comprenant une ou plusieurs informations de sécurité acoustiques qui consistent en au moins une information de sécurité connue du dispositif d'authentification et au moins une information de sécurité dynamique variable, comprenant les étapes consistant à :
a) fournir un moyen de stockage pour enregistrer les informations de sécurité acoustiques, le moyen de stockage comprenant une base de données dans laquelle les informations de sécurité acoustiques ou des données qui en sont dérivées sont enregistrées,
b) associer les informations de sécurité acoustiques ou des parties de celles-ci à une personne ou à un objet donné(e),
c) transmettre l'information de sécurité acoustique connue de la personne à identifier ou à authentifier ou stockée ou générée dans l'objet et l'information de sécurité dynamique à l'instant d'authentification par un dispositif de communication,
d) comparer l'information de sécurité acoustique connue transmise et l'information de sécurité dynamique avec les informations de sécurité connues et dynamiques enregistrées dans le moyen de stockage,
la personne et/ou l'objet étant authentifié(s) positivement si l'information de sécurité acoustique connue transmise coïncide avec l'information de sécurité connue enregistrée dans le moyen de stockage et l'information de sécurité dynamique transmise a changé au moins partiellement par rapport à l'information de sécurité dynamique enregistrée dans le moyen de stockage par rapport au dernier instant d'interrogation, l'information de sécurité enregistrée étant remplacée par l'information de sécurité transmise lors de l'actualisation du moyen de stockage.

2. Procédé selon la revendication 1, **caractérisé en ce que** l'information de sécurité dynamique change sur la base d'un paramètre ou d'une influence physique, mathématique ou chimique, d'un algorithme, en fonction du temps ou du lieu, selon une règle enregistrée dans le dispositif d'authentification ou en raison du comportement, de la manière de parler de la personne ou d'une propriété de la personne ou de l'objet.

3. Procédé selon la revendication 1 ou 2, **caractérisé en ce que** l'information de signal connue du dispositif d'authentification est une information de signal acoustique ou une information de signal dérivée d'un signal acoustique ou d'un mélange de signaux qui consiste en une information de sécurité connue et une information de sécurité dynamique.

4. Procédé selon l'une des revendications précédentes, **caractérisé en ce que** les informations de sécurité connues et/ou dynamiques sont générées par un générateur de signaux et sont présentes sous la forme d'informations de sécurité acoustiques dans un mélange de signaux ou de sons.

5. Procédé selon l'une des revendications précédentes, **caractérisé en ce que** les informations de sécurité connues et/ou dynamiques peuvent être représentées audiovisuellement par des courbes, des séquences de signaux, des symboles, des couleurs, des images, des lettres, des chiffres, des notes de musique ou d'autres signes.

6. Procédé selon l'une des revendications précédentes, **caractérisé en ce que** les informations de sécurité connues et/ou dynamiques ne sont pas audibles par l'oreille humaine.

7. Procédé selon l'une des revendications précédentes, **caractérisé en ce que** les informations de sécurité connues et/ou dynamiques sont choisies dans le groupe constitué par des signaux acoustiques, des courbes enveloppantes, des bruits, des mélodies, des séquences de sons, des sons, des voix, des langues et des parties de discours, des intonations et des modes d'expression, des profils vocaux, des bruits de fond, qui peuvent être enregistrés et/ou représentés par des moyens techniques.

8. Procédé selon l'une des revendications précédentes, **caractérisé en ce que** l'information de sécurité dynamique est au moins partiellement superposée par au moins une information de sécurité connue.

9. Procédé selon l'une des revendications précédentes, **caractérisé en ce qu'**avant, après ou pendant l'authentification, l'information de sécurité connue est convertie en une information de sécurité dynamique ou l'information de sécurité dynamique convertie en une information de sécurité connue.

10. Procédé selon l'une des revendications précédentes, **caractérisé en ce que** les informations de sécurité acoustiques se superposent et que certaines informations de sécurité changent dynamiquement.

11. Procédé selon l'une des revendications précédentes, **caractérisé en ce que** le changement dynamique de l'information de sécurité dynamique s'effectue par un décalage, une élévation ou un abaissement, une amplification, une atténuation, une modification, un raccourcissement, un allongement, un échange de l'information de sécurité.

12. Procédé selon l'une des revendications précédentes, **caractérisé en ce qu'**avant l'authentification effective de la personne ou de l'objet, une pré-authentification est interposée, lors de laquelle, avant l'authentification effective, une information de sécurité est d'abord transmise d'un dispositif terminal au dispositif d'authentification et ensuite une demande de la réponse d'authentification a lieu au dispositif terminal à la personne ou à l'objet enregistré(e) dans le moyen de stockage.

13. Procédé selon l'une des revendications précédentes, **caractérisé en ce que** l'information de sécurité acoustique est associée à une information de sécurité dynamique sous la forme d'un code individuel, d'une adresse réseau, d'une adresse Internet ou d'une autre caractéristique individuelle, l'information de sécurité dynamique comprenant aussi bien des éléments dynamiques variables que des éléments rigides.

14. Dispositif d'authentification, comprenant
a) un dispositif de lecture d'informations de sécurité analogiques et/ou numériques,
b) un dispositif de communication pour échanger les informations de sécurité,
c) un moyen de stockage pour enregistrer de manière centralisée les informations de sécurité,
**caractérisé en ce que** les informations de sécurité du dispositif d'authentification sont constituées d'informations de sécurité connues et d'informations de sécurité dynamiques variables et que l'authentification a lieu d'après un procédé selon l'une des revendications 1 à 13.
